# EUROPEAN PATENT APPLICATION

(11) **EP 4 497 735 A1**
(43) Date of publication of application: **29.01.2025**
(21) Application number: 23187309.2
(22) Date of filing: 24.07.2023
(51) Int. Cl.: C04B 24/26, C04B 103/52

(54) **USE OF POLYVINYL ALCOHOL AS GRINDING AID FOR MINERAL MATERIALS**

(71) Applicant: Sika Technology AG, 6340 Baar (CH)
(72) Inventor: HELLER, Thomas, 69181 Leimen (DE); MÜLLER, Thomas, 69181 Leimen (DE); UNSELD, Johannes Otto, 69181 Leimen (DE)
(74) Representative: Sika Patent Attorneys

(57) **Abstract**

The present invention relates to the use of polyvinyl alcohol as a grinding aid for mineral materials, especially Portland cement clinker, kiln dust, stone powders, slag, fly ash, burnt oil shale, silica fume, and/or volcanic ashes. The use of polyvinyl alcohol as a grinding aid leads to improved mineral materials which are less susceptible to contents of adsorbing materials, especially contents of clay minerals. The present invention also relates to ground mineral materials obtained by dry grinding in the presence of a polyvinyl alcohol, and to construction materials comprising such ground mineral materials.

## Description

### Technical Field

The present invention relates to the use of polyvinyl alcohol as a grinding aid for mineral materials, especially Portland cement clinker, kiln dust, stone powders, slag, fly ash, burnt oil shale, silica fume, and/or volcanic ashes. The use of polyvinyl alcohol as a grinding aid leads to improved mineral materials which are less susceptible to contents of adsorbing materials, especially contents of clay minerals.

### Background of the invention

There is an increasing need for the reduction of the CO₂ footprint of cementitious material such as concrete. One way is to reduce the amount of Portland cement traditionally used in cementitious materials by materials having cementitious properties, but a lower CO₂ footprint. Such materials are sometimes called supplementary cementitious materials (SCM). Examples for SCM include limestone, slag, especially ground granulated blast furnace slag, burnt oil shale, fly ash, silica fume, and volcanic ashes.

Many of these SCM are natural materials and/or obtainable only in varying qualities. One problem often encountered is the presence of adsorbing materials, especially of clay minerals, in SCM. SCM having certain levels of adsorbing materials can be a problem because the quality of cements produced with such SCM can be lowered as chemical admixtures and/or water are adsorbed thereby.

In particular, clay minerals, natural or calcined, which can be of the swelling or non-swelling type, often have a negative influence on the quality of the construction materials produced with such SCM, because clay minerals lead to reduced flow and workability of the construction material which is equivalent to an increased water demand. Also, the effectiveness of common dispersants used in construction materials is reduced when swelling and/or non-swelling clay minerals are present.

Therefore, various solutions have been proposed to address these problems and especially the addition of certain admixtures has proven to be useful to mitigate the effects of swelling and non-swelling clays.

For example, WO 1998/58887 proposes various additives to mitigate the negative influence of swelling clays in cementitious compositions. Among the additives disclosed therein is regular polyvinyl alcohol.

EP 2048123 discloses the use of polyvinyl alcohol to mitigate the effect of swelling and non-swelling bentonites in concrete mixtures.

EP 2542511 teaches the use of organic polymer of low cationic charge density, which can be polyvinyl alcohols, to mitigate the effect of non-swelling clays in mineral compositions for the preparation of hydraulic compositions.

However, existing solutions propose to use additional admixtures to cementitious materials. The use of additional admixtures is sometimes not feasible for example in concrete batching plants as additional dosing units would be needed. There is therefore a need for improved mineral materials useful in the production of construction materials that have less problems with contents of adsorbing materials.

### Summary of the invention

It is an objective of the present invention to provide improved mineral materials that can be used for the production of construction materials. Especially, it is an objective of the present invention to provide improved Portland cement, stone powders, slag, fly ash, burnt oil shale, silica fume, and/or volcanic ashes. In particular, the improved mineral materials should be less susceptible to contents of adsorbing materials, especially contents of clay minerals. It is a further objective of the present invention to provide construction materials that are less problematic regarding contents of adsorbing materials, especially contents of clay minerals.

Surprisingly, the objective of the present invention could be solved by the use of a grinding aid as claimed in claim 1.

In particular, it was found that polyvinyl alcohols, in particular copolymerized polyvinyl are particularly well suited for the improvement of mineral materials, and especially the mitigation of the effects of clay minerals, when such polyvinyl alcohol was used as an additive during the grinding of said mineral materials.

Further aspects of the present invention are the subject of the independent claims. Preferred embodiments are subject of the dependent claims.

### Ways for carrying out the invention

In a first aspect the present invention relates to use of polyvinyl alcohol as a grinding aid for mineral materials, especially for Portland cement clinker, kiln dust, stone powders, slag, fly ash, burnt oil shale, silica fume, and/or volcanic ashes.

It is in particular also possible that the polyvinyl alcohol is used as a grinding aid for a mixture of two or more of Portland cement clinker, kiln dust, stone powders, slag, fly ash, burnt oil shale, silica fume, and/or volcanic ashes.

The term "Portland cement clinker" refers to Portland cement obtained from the cement kiln and not ground. It typically occurs as lumps or nodules with a size of several millimeters. Portland cement clinker does not contain any admixtures such as grinding aids. The term "Portland cement" to the contrary refers to a ground material of a given fineness. Portland cement may contain additives, such as grinding aids and cure regulators, in particular gypsum.

The term "stone powders" refers to any crushed stone. Especially, the term "stone powders" refers to crushed limestone.

Slag in particular is ground granulated blast furnace slag. However, slag may also be basic oxygen furnace slag, ladle slag, electric arc furnace slag, or municipal waste incineration slag. Within the present context. The term slag may also include red mud.

According to preferred embodiments, the polyvinyl alcohol is a copolymerized polyvinyl alcohol comprising units derived from vinyl alcohol and additionally comprising units derived from monomers with carboxylate groups.

The term "copolymerized polyvinyl alcohol" within the present context relates to a polyvinyl alcohol copolymerized with monomers other than derivatives of vinyl alcohol. Especially, copolymerized polyvinyl alcohols of the present invention are polymers comprising units derived from vinylalcohol and additionally comprising units derived from monomers with carboxylate groups. Polyvinyl alcohols are well-known polymers obtainable from the polymerization of esters of vinyl alcohol, especially of vinyl acetate, and subsequent saponification to a desired degree. Preferred copolymerized polyvinyl alcohols can, for example, be obtained by copolymerization of esters of vinyl alcohol, especially of vinyl acetate, with suitable ethylenically unsaturated monomers having carboxylate groups or esterified carboxylate groups, and subsequent saponification. For example, vinyl acetate can be copolymerized with acrylic acid, methacrylic acid, maleic acid, maleic acid anhydride, fumaric acid, tiglic acid, angelic acid, itaconic acid, and/or esters of any of these acids such as for example alkyl (meth)acrylates. Other ethylenically unsaturated monomers may additionally be copolymerized, for example to add additional functionalities such as sulfate or sulfonate groups, phosphate or phosphonate groups, polyether groups, silane groups, epoxy groups, and/or amine groups. Subsequent saponification of the copolymerizate to a desired degree leads to copolymerized polyvinyl alcohols of the present invention. Suitable methods to produce copolymerized polyvinyl alcohols of the present invention by copolymerization are, for example, disclosed in WO 2021/241506, preparation examples 1- 8.

According to embodiments, copolymerized polyvinyl alcohols of the present invention thus comprise or consist of monomeric units of the general structures (I), (II), and (III): 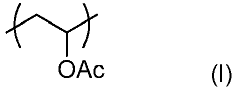 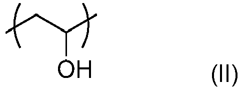 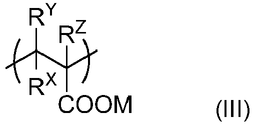 where
each R^{X} and R^{Y} independently of each other is hydrogen, a methyl group, or COOM,
each R^{Z} independently of one another is hydrogen or methyl,
M represents a hydrogen atom, an alkali metal, an alkaline earth metal, an ammonium ion, or mixtures thereof, or a C₁ - C₁₆ alkyl group which can be substituted by O, N, P, S, or Si,
and where R^{X} is COOM a ring may be formed with the COOM group to form the anhydride.

According to these embodiments, the copolymerized polyvinyl alcohols of the present invention comprises or consists of all three monomeric units of the general structures (I), (II), and (III). The copolymerized polyvinyl alcohols of the present invention do not consist of only one or two of the general structures (I), (II), and (III). Especially, the copolymerized polyvinyl alcohols of the present invention are not homopolymers of any of the general structures (I), (II), and (III).

Preferably, the copolymerized polyvinyl alcohols comprise or consist of (in each case relative to the total amount of monomer units present in the copolymerized polyvinyl alcohol):
(i) between 52 - 89 mol% of vinyl alcohol group containing monomers of general structure (II),
(ii) between 10 - 47 mol% of vinyl acetate group containing monomers of general structure (I), and
(iii) between 1 - 35 mol%, preferably 1.5 - 15 mol% of carboxylate group containing monomers of general structure (III).

Other structural units may additional be present in copolymerized polyvinyl alcohols of the present invention. Such other structural units may be derived from monomers selected from ethylene, 1-butene, isobutylene, styrene, (meth)acrylamide, maleimide, silanized vinyl alcohols, and mixtures thereof. It is, however, preferred that such other structural units are present in not more than 50 mol%, preferably not more than 20 mol%, more preferably not more than 5 mol%, relative to the total amount of monomer units present in the copolymerized polyvinyl alcohol. It is especially preferred, that copolymerized polyvinyl alcohols are essentially free of structural units other than of the general type (I), (II), and (III). Essentially free meaning that such other structural units are present in not more than 0.01 mol%, relative to the total amount of monomer units present in the copolymerized polyvinyl alcohol.

The incorporation of different monomers into the polymer chain of the copolymerized polyvinyl alcohol can make it possible to optimize the adsorption characteristics thereof on clay minerals, especially on swelling clays. It may thus be possible to further optimize the copolymerized polyvinyl alcohols for clay mitigation.

The molar ratio of monomeric units in copolymerized polyvinyl alcohols can be adjusted by the monomer ratio used in a copolymerization reaction to produce such copolymerized polyvinyl alcohols. The molar ratio of monomeric units in copolymerized polyvinyl alcohols can be determined by known techniques, for example by nuclear magnetic resonance (NMR) and/or acid-base titration.

The degree of saponification of a copolymerized polyvinyl alcohol of the present invention is not particularly limited. According to embodiments, the degree of saponification is 30% or more, preferably 60% or more, more preferably 70% or more, especially between 70 - 95%.

The polymerization degree of a copolymerized polyvinyl alcohol of the present invention is not particularly limited. The polymerization degree is the average number of monomeric units polymerized into one chain of copolymerized polyvinyl alcohol. According to embodiments, the polymerization degree of the copolymerized polyvinyl alcohol is between 2 - 20000, preferably between 100 - 10000, more preferably between 200 - 4000, still more preferably between 400 - 3000, in particular 750 - 1500.

According to particularly preferred embodiments, a copolymerized polyvinyl alcohol of the present invention has a polymerization degree of between 2 - 20000, preferably between 100 - 10000, more preferably between 200 - 4000, still more preferably between 400 - 3000, in particular 750 - 1500, and has a degree of saponification of between 70 and 95 %.

A copolymerized polyvinyl alcohol of the present invention may be used in liquid form, in form of a solution in water, or in powder form. If present in powder form, the average particle size preferably is between 10 - 1000 µm, more preferably 50 - 500 µm, still more preferably, 80 - 300 µm.

The copolymerized polyvinyl alcohol of the present invention is essentially free of monomeric units carrying cationic charges. Essentially free means that the molar ratio of any monomers carrying cationic charges relative to all monomeric units in the copolymerized polyvinyl alcohol is not higher than 1 mol%, preferably not higher than 0.5 w%, more preferably not higher than 0.1 w%.

Copolymerized polyvinyl alcohols according to the present invention are for example available under the brand name Poval^{™} K-series or SD-series from the company Kuraray.

According to preferred embodiments, the grinding aid used in the present invention comprises polyvinyl alcohol as described above and additionally comprises at least one of alkanolamines, glycols, glycerol, nitrates, nitrites, chlorides, thiocyanates, borates, calcium silicate hydrates, sugars, sugar acids, carboxylic acids or their salts, superplasticizers, and superabsorbent polymers.

The use of such additional grinding aids may further improve the grinding efficiency and/or the performance of ground mineral materials.

In particular, the alkanolamines are selected from monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyiso-propylethylenediamine (THIPD), as well as mixtures of two or more of these alkanolamines.

Examples of suitable glycols are monoethylene glycol, diethylene glycol, triethylene glycol, tetraethylene glycol, pentaethylene glycol, polyethylene glycol, in particular with 6 or more ethylene units, e.g. PEG 200, neopentyl glycol, hexylene glycol, propylene glycol, dipropylene glycol and polypropylene glycol. It is also possible to use mixtures of two or more different glycols as well as of at least one glycol and glycerine.

The terms "glycerol" and "glycerine" are used as synonyms throughout this invention. The terms "glycerol" and "glycerine" especially both stand for propane-1 ,2,3-triol. In one embodiment, the glycerol is a so-called bio-glycerine, which can be produced from a renewable raw material.

Nitrates, nitrites, chlorides, thiocyanates, and borates especially are salts of alkali metals or alkaline earth metals. In particular suitable are sodium nitrate, sodium nitrite, calcium chloride, and sodium thiocyanate.

A "sugar" in the sense of the present invention is a carbohydrate having an aldehyde group. In particularly preferred embodiments, the sugar belongs to the group of monosaccharides or disaccharides. Examples of sugars include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose and xylobiose. Sugars can also be used in form of e.g. vinasse, molasse.

A "sugar acid" in the context of the present invention is a monosaccharide having a carboxyl group. It may belong to any of the classes of aldonic acids, ursonic acids, uronic acids or aldaric acids. Preferably, it is an aldonic acid. Examples of sugar acids useful in connection with the present invention include, but are not limited to, glyceric acid, xylonic acid, gluconic acid, ascorbic acid, neuraminic acid, glucuronic acid, galacturonic acid, iduronic acid, tartaric acid, mucilic acid and saccharic acid. The sugar acid may be in the form of the free acid or as a salt. According to embodiments, salts of sugar acids may be salts with metals of groups la, Ila, lb, Ilb, IVb, Vlllb of the periodic table of elements. Preferred salts of sugar acids are salts of alkali metals, alkaline earth metals, iron, cobalt, copper, or zinc. Especially preferred are salts with monovalent metals such as lithium, sodium, and potassium.

The term "carboxylic acid" means any organic molecule with a carboxylate group, except sugar acids. Especially preferred carboxylic acids are oxalic acid, malonic acid, adipic acid, lactic acid, citric acid, and tartaric acid. The carboxylic acid may be in the form of the free acid or in the form of a salt. According to embodiments, salts of carboxylic acids may be salts with metals of groups la, Ila, lb, Ilb, IVb, Vlllb of the periodic table of elements. Preferred salts of sugar acids are salts of alkali metals, alkaline earth metals, iron, cobalt, copper, or zinc. Especially preferred are calcium salts of carboxylic acids.

The term "superabsorbent polymers" refers to polymers that can absorb large amounts of water. When superabsorbent polymers come into contact with water, the water molecules diffuse into the cavities of the polymer network and hydrate the polymer chains. The polymer can thus swell and form a polymer gel or slowly dissolve. This step is reversible, so the superabsorbent polymers can be regenerated to their solid state by removing the water. The water absorption property is denoted by the swelling ratio, by which is meant the ratio of the weight of a swollen superabsorbent polymer to its weight in the dried state. The swelling ratio is influenced by the degree of branching of the superabsorbent polymer, any crosslinking that may be present, the chemical structure of the monomers that form the superabsorbent polymer network, and external factors such as the pH, ion concentration of the solution, and temperature. Because of their ability to interact with water, superabsorbent polymers are also referred to as hydrogels.

Examples of superabsorbent polymers useful in the context of the present invention include but are not limited to natural polymers, such as starch, cellulose, such as cellulose ether, chitosan or collagen, alginates, synthetic polymers, such as poly(hydroxyethyl methacrylate), polyethylene glycol) or polyethylene oxide) or ionic synthetic polymers, such as polyacrylic acid (PAA), polymethacrylic acid (PMAA), polyacrylamides (PAM), polylactic acid (PLA), polyethyleneimine, polyvinyl alcohol (PVA) or polyvinylpyrrolidone.

Preferred superplasticizers within the present context are selected from lignosulphonates, naphthalin sulfonates, sulfonated melamine formaldehyde resins, polyacrylates, polyarylated esters, polyaromatic ethers, and polycarboxylate ethers or esters. Especially preferably, are comb polymers of the type polycarboxylate ether or ester, which are abbreviated throughout this invention as PCE.

Superabsorbent polymers that are particularly suitable in the context of the present invention are ionic superabsorbent polymers, in particular those based on polyacrylamide modified with acrylic acid, which can be of either linear or crosslinked structure.

According to embodiments, a grinding additive of the present invention may additionally comprise a defoamer. Examples of suitable defoamers are mineral or vegetable oils, fatty acids, fatty acid esters, fatty alcohols, alkoxylated fatty acids, alkoxylated fatty alcohols, polyalkylene glycol derivatives comprising units of propylene glycol and/or butylene glycol, acetylenic compounds, organo-silicone compounds, and organic phosphate esters.

Preferably, the defoamer is an organic phosphate ester, especially triisobutyl phosphate (TiBP) or tributyl phosphate (TBP).

A grinding aid of the present invention may be in the form of a mono-component or a multi-component composition. In a multi-component composition, components of the grinding aid are stored in at least two spatially separate receptables. It is generally preferred, within the present context, to use mono-component grinding aids.

According to embodiments, the mineral material of the present invention comprises clay minerals, especially swelling clays or non-swelling clays.

Clay minerals within the present context are solid materials which preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite) or mixtures thereof. Clay minerals belonging to the kaolin group, especially kaolinite, montmorillonite, and micas, especially muscovite and illite, as well as mixtures thereof are especially preferred. Clay minerals within the present context can be any type of clay mineral, for example crude clays, low-temperature calcined clays, or high-temperature calcined clays. Crude clays are clay minerals extracted from e.g. a quarry, optionally purified and optionally dried. In particular, the crude clays are extracted together with any mineral material of the present invention. It is therefore possible that any mineral material of the present invention comprises a certain amount of clay mineral, in particular crude clay.

Low-temperature calcined clays are clays that have been thermally treated at temperatures between 500 - 1200°C. Such low-temperature calcination typically leads to removal of interlayer water and at least partial, preferably full, de-hydroxylation. For example, low-temperature calcined clay minerals may be produced in rotary kiln or in a flash calciner. High-temperature calcined clays are clay minerals that have been thermally treated at temperatures above 1200°C and typically between 1300 - 1400°C. High-temperature calcined clays typically are crystalline or contain high amounts of crystalline phases, especially of mullite. According to embodiments, mineral materials of the present invention comprise low-temperature and/or high-temperature calcined clays. This is especially the case where the mineral material has been heat treated. The low-temperature and/or high-temperature calcined clay may then result from the calcination of crude clay already present in the mineral material prior to heat treatment.

In particular, the mineral material comprises clay minerals consisting of at least 10 w%, preferably at least 30 w%, more preferably at least 45 w%, still more preferably at least 70 w%, based on the total dry weight of the clay mineral, of kaolinite and/or montmorillonite.

According to embodiments, the grinding additive is added to the mineral material prior to and/or during grinding in a total amount of between 0.001 - 3 w%, preferably 0.002 - 1 w%, more preferably 0.01 - 0.5 w%, in each case relative to the total dry weight of the mineral material.

According to embodiments, the grinding of the present invention is a method of dry grinding. Therefore, preferably, the amount of water present during grinding is not higher than 10 w%, preferably 1 w%, more preferably 0.1 w%, still more preferably 0.06 w%, relative to the total dry weight of the mineral material.

It is preferred that fines and/or the powdery material are removed from the grinding zone during grinding. This increases the grinding efficiency. The removal preferably is done continuously, for example by blowing air through the grinding zone.

Additionally the grinding may comprise a step of separating the ground mineral materials according to particle size. According to embodiments, separation is effected at a predefined cut-off particle size in order to retrieve ground mineral materials with a particle size of at least the predefined cut-off particle size and/or in order to retrieve ground mineral materials with a particle size below the predefined cut-off particle size. According to further embodiments, it is also possible to separate the ground mineral materials into fractions of different particle size.

According to embodiments, separation is done by filtration, sieving, sedimentation, density separation, wind sifting, e.g. in cyclones, and/or centrifugation.

Grinding can be done in a batch process or in a continuous process. Installations, especially grinders and mills, useful for the practice of the present invention are not particularly limited and are known per se. According to embodiments, the grinding is done in an attrition mill or a compressive grinder, especially in a ball mill or in a vertical roller mill or in a high pressure roller mill. However, other mill types such as for example hammer mills, pebble mills, cone mills, E-mills, or jaw crushers are likewise suitable.

According to embodiments, dry grinding of the mineral material is done in a ball mill with steel balls of a diameter between 0.5 - 100 mm. A weight ratio of mineral material: steel balls is between 1:10 and 20:1. The time for dry grinding may vary between 1 minute and 3 hours, preferably 5 minutes and 1 hour, especially 10-30 minutes.

In another aspect the present invention relates to a method to improve the quality of mineral materials, especially of Portland cement clinker, stone powders, slag, fly ash, burnt oil shale, silica fume, and/or volcanic ashes, said method comprising a step of intergrinding a polyvinyl alcohol with said mineral material.

All features and embodiments as described above also apply to this aspect.

In particular, in a method of the present invention, the polyvinyl alcohol is a copolymerized polyvinyl alcohol comprising units derived from vinyl alcohol and additionally comprising units derived from monomers with carboxylate groups.

The term "improvement of quality" in particular refers to a lower susceptibility of mineral materials to the presence of adsorbing materials, in particular clay minerals. The susceptibility to adsorbing materials can for example be determined by measuring the slump flow of a mineral material when mixed with a pre-defined amount of water and superplasticizer as described above. Measurement can be done according to standard DIN EN 12350-5. A higher slump flow is indicative for a lower susceptibility of the mineral material to adsorbing materials, in particular if the amount of superplasticizer added is lowered. In addition or alternatively, the amount of free superplasticizer can be measured. Suitable methods to measure the susceptibility of mineral materials to the presence of adsorbing materials are for example disclosed in the examples part of WO 2022/117527.

The susceptibility to adsorbing materials can for example be determined by measuring the effect of clay minerals on the workability of a composition comprising a ground mineral material of the present invention. Workability can, for example, be measured in terms of rheological parameters such as slump according to standard EN 12350-2, slump flow according to standard EN 12350-5, slump flow spread according to standard EN 12350-8, flow time according to standard EN 12350-9, a V funnel test according to EN 12350-9, or a J14 funnel test according to standard JSCE-F 541-1999. An especially suitable rheological parameter is the slump flow according to standard EN 12350-5. Workability can also be measured in terms of water demand of a composition comprising a ground mineral material of the present invention. The water demand is the amount of water needed to achieve a given target level of a rheological parameter, especially flow.

In another aspect, the present invention relates to a ground mineral material, especially Portland cement, stone powders, slag, fly ash, burnt oil shale, silica fume, and/or volcanic ashes, obtained by dry grinding the mineral material in the presence of a polyvinyl alcohol as a grinding additive.

All features and embodiments as described above also apply to this aspect.

In particular, in a method of the present invention, the polyvinyl alcohol is a copolymerized polyvinyl alcohol comprising units derived from vinyl alcohol and additionally comprising units derived from monomers with carboxylate groups.

In particular, the ground mineral material can be a mixture of Portland cement, stone powders, slag, fly ash, burnt oil shale, silica fume, and/or volcanic ashes.

According to embodiments, the ground mineral material is a cement of type CEM I, CEM II, CEM III, CEM IV, CEM V, or CEM VI as described in standards EN 197-1 or EN 197-5.

The ground mineral material of the present invention in particular is dedicated for the use in construction materials. Construction materials especially are cements, mortars, and concrete. Construction materials within the present context comprise a ground mineral material as described above and may additionally comprise aggregates, fillers, and/or admixtures. Water may also be present in construction materials. As such, construction materials within the present context relate to dry, powdery materials as well as to wet, pasty to liquid, materials.

According to another aspect, the present invention relates to a construction material comprising (based on the total dry weight of the construction material unless otherwise noted)
a) 5 - 95 w% of at least one ground mineral material as described above,
b) 0.001 - 25 w% of adsorbing materials, in particular of clay minerals,
c) 0.01 - 10 w%, preferably 0.1 - 5 w%, especially 0.1 - 1 w%, based on the total dry weight of the at least one ground mineral material, of at least one dispersant for the mineral binder, especially a polycarboxylate ether or ester,
d) 0.001 - 1 w%, preferably 0.007 - 0.5 w%, especially 0.01 - 0.2 w%, based on the total dry weight of the at least one ground mineral material, of a polyvinyl alcohol,
e) optionally an additional cementitious material,
f) optionally 4 - 90 w% of aggregates, and
g) optionally further admixtures,
h) optionally water.

All features and embodiments as described above also apply to this aspect.

The polyvinyl alcohol is added to the construction material together with the ground mineral material as the polyvinyl alcohol is used as a grinding aid during the grinding of the mineral binder.

Aggregates can be any aggregate typically used for construction materials. Especially, aggregates can be sand, gravel, crushed rock, soil, or bio-based aggregate. Aggregates may also comprise adsorbing materials, especially clays minerals. Further admixtures can especially be accelerators, retarders, plasticizers, surfactants, defoamers, thickeners, water retention agents, corrosion inhibitors, expansion agents, shrinkage reducers, pigments, air entrainers, hydrophobing agent, and/or biocides, provided that they are chemically different from any of clay minerals, dispersants for mineral binders, polyvinyl alcohol, aggregates, and fillers as described before.

According to preferred embodiments, a construction material of the present invention is essentially free of any of organic cations, especially phosphonium, pyridinium, sulfonium, (poly)quaternary ammonium, and amine oxide cations, as well as essentially free of crown ethers, polyvinyl alcohol that is not copolymerized, and/or poly(meth)acrylic acid. According to preferred embodiments, a construction material of the present invention is essentially free of organic molecules with a cationic charge density higher than 0.5 meq/g. Essentially free in this context means that the respective compounds are contained in not more than 1 w%, preferably not more than 0.1 w% relative to the total dry weight of the mineral construction material. The cationic charge density can be measured by titration as described in the examples section of EP 2542511.

According to embodiments in a construction material of the present invention the at least one mineral binder is selected from calcium sulfate, cement, or mixtures thereof.

The amount of water comprised may vary in a wide range depending on the intended workability of the mineral construction material. Generally, a larger amount of water will lead to a more liquid mineral construction material. Suitable amounts of water are such that a weight ratio of water to dry powder between 0.1 - 10, preferably 0.2 - 5, more preferably 0.3 - 2 results.

In a last aspect, the present invention relates to a hardened body obtained by hardening a construction material as described above.

A hardened body can, for example, be a piece of concrete, a piece of gypsum, a brick, a panel, a plaster, a render, a coating, a joint, a part of a building or a building.

## Claims

1. The use of polyvinyl alcohol as a grinding aid for mineral materials, especially for Portland cement clinker, kiln dust, stone powders, slag, fly ash, burnt oil shale, silica fume, and/or volcanic ashes.

2. The use as claimed in claim 1, **characterized in that** the polyvinyl alcohol is a copolymerized polyvinyl alcohol comprising units derived from vinyl alcohol and additionally comprising units derived from monomers with carboxylate groups.

3. The use as claimed in claim 2, **characterized in that** the copolymerized polyvinyl alcohol has a polymerization degree of between 2 - 20000, preferably between 100 - 10000, more preferably between 200 - 4000, still more preferably between 400 - 3000, in particular 750 - 1500, and has a degree of saponification of between 70 and 95 %.

4. The use as claimed in any of the preceding claims, **characterized in that** the grinding aid additionally comprises at least one of alkanolamines, glycols, glycerol, nitrates, nitrites, chlorides, thiocyanates, borates, calcium silicate hydrates, sugars, sugar acids, carboxylic acids or their salts, superplasticizers, and superabsorbent polymers.

5. The use as claimed in claim 4, **characterized in that** the alkanolamines are selected from monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyiso-propylethylenediamine (THIPD), as well as mixtures of two or more of these alkanolamines.

6. The use as claimed in at least one of the preceding claims, **characterized in that** the mineral material comprises clay minerals, especially swelling clays or non-swelling clays.

7. The use as claimed in claim 6, **characterized in that** the mineral material comprises clay minerals consisting of at least 10 w%, preferably at least 30 w%, more preferably at least 45 w%, still more preferably at least 70 w%, based on the total dry weight of the clay mineral, of kaolinite and/or montmorillonite.

8. The use as claimed in any of the previous claims, **characterized in that** the grinding additive is added to the mineral material prior to and/or during grinding in a total amount of between 0.001 - 3 w%, preferably 0.002 - 1 w%, more preferably 0.01 - 0.5 w%, in each case relative to the total dry weight of the mineral material.

9. The use as claimed in least one of the preceding claims, **characterized in that** the amount of water present during grinding is not higher than 10 w%, preferably 1 w%, more preferably 0.1 w%, still more preferably 0.06 w%, relative to the total dry weight of the mineral material.

10. The use as claimed in at least one of the preceding claims, **characterized in that** the grinding is done in an attrition mill or a compressive grinder, especially in a ball mill or in a vertical roller mill or in a high pressure roller mill.

11. A method to improve the quality of mineral materials, especially of Portland cement clinker, stone powders, slag, fly ash, burnt oil shale, silica fume, and/or volcanic ashes, said method comprising a step of intergrinding a polyvinyl alcohol with said mineral material.

12. A method as claimed in claim 11, **characterized in that** the polyvinyl alcohol is a copolymerized polyvinyl alcohol comprising units derived from vinyl alcohol and additionally comprising units derived from monomers with carboxylate groups.

13. A ground mineral material, especially Portland cement, stone powders, slag, fly ash, burnt oil shale, silica fume, and/or volcanic ashes, obtained by dry grinding the mineral material in the presence of a polyvinyl alcohol as a grinding additive.

14. A construction material comprising (based on the total dry weight of the construction material unless otherwise noted)
a) 5 - 95 w% of at least one ground mineral material as claimed in claim 13,
b) 0.001 - 25 w% of adsorbing materials, especially clay minerals,
c) 0.01 - 10 w%, preferably 0.1 - 5 w%, especially 0.1 - 1 w%, based on the total dry weight of the at least one ground mineral material, of at least one dispersant for the mineral binder, especially a polycarboxylate ether or ester,
d) 0.001 - 1 w%, preferably 0.007 - 0.5 w%, especially 0.01 - 0.2 w%, based on the total dry weight of the at least one ground mineral material, of a polyvinyl alcohol,
e) optionally an additional cementitious material,
f) optionally 4 - 90 w% of aggregates and/or fillers, and
g) optionally further admixtures,
h) optionally water.

15. A hardened body obtained by hardening a construction material as claimed in claim 14.
